Europäisches Patentamt

European Patent Office

Office européen des brevets

(19)

(11) Publication number: **0 067 176**

**B1**

(12) **EUROPEAN PATENT SPECIFICATION**

(45) Date of publication of patent specification: **13.08.86**

(51) Int. Cl.⁴: **A 61 J 1/00,** B 65 D 83/04, B 65 D 85/56

(21) Application number: **81903229.3**

(22) Date of filing: **01.12.81**

(86) International application number: **PCT/AU81/00175**

(87) International publication number: **WO 82/01992 24.06.82 Gazette 82/16**

(54) **PILL BOX.**

(30) Priority: **18.12.80 AU 6993/80**

(43) Date of publication of application: **22.12.82 Bulletin 82/51**

(45) Publication of the grant of the patent: **13.08.86 Bulletin 86/33**

(84) Designated Contracting States: **CH DE FR GB LI NL SE**

(56) References cited:
**AU-D-2 694 563**
**CA-A-1 085 352**
**DE-A-2 301 834**
**FR-A-1 227 370**
**US-A-2 953 242**
**US-A-3 334 731**
**US-A-3 744 672**
**US-A-3 921 806**
**US-A-4 164 301**
**US-A-4 261 468**

(73) Proprietor: **WRENNALL, Richard Keith**
**74 Cromer Road**
**Beaumaris, Vic. 3193 (AU)**

(72) Inventor: **WRENNALL, Richard Keith**
**74 Cromer Road**
**Beaumaris, Vic. 3193 (AU)**

(74) Representative: **Andrejewski, Walter et al**
**Patentanwälte Andrejewski, Honke & Partner**
**Postfach 10 02 54 Theaterplatz 3**
**D-4300 Essen 1 (DE)**

Courier Press, Leamington Spa, England.

## Description

This invention relates generally to lidded containers for storing and dispensing in solid dosage form, a number of pharmaceutical preparations such as capsules, pills, tablets and the like. More particularly, the invention is concerned with a portable and re-usable, multi-compartmented "pill box" or dispenser for solid dosage form pharmaceutical preparations wherein the number of compartments corresponds to a given total time period and also to predetermined regular time intervals and separate lids are designed to be moved successively to uncover selected compartments filled with pills, tablets, capsules and the like.

Blister packs have been used as dispensing packages for containing a plurality of single dosages of pills, tablets, capsules and the like that can be selectively removed one dose at a time. A cover portion for the package is a sandwich structure of paperboard with rupturable metal foil. Disc-shaped punch-out lids are cut into the paperboard layer and held in position by the foil, each tablet is contained in a pocket which when collapsed against the cover, causes rupturing, so that the pill can be pressed through the opening.

A seven-day dosage dispenser for solid dosage form pharmaceutical has previously been devised with a box of generally rectangular configuration divided into seven compartments by internal walls, each compartment being openable and closeable by a thin, slide-out lid. Such lids can slide out completely, or snap-off and both the pills and the lids can be lost or protrude when in use and can be accidentally broken off. This type of dispenser also has multi-coloured compartments or components and for people with poor vision or no vision or colour perception and particularly the elderly, a more satisfactory device would be desirable.

In order to dispense tablets from "blister-pack" type packages or dispensers, it is usually necessary to push with one's finger and exert pressure on the surface of the tablet which can crack. One dispenser has been devised for single dosage administration of oral contraceptive tablets in which the tablets are carried in upright or vertical position in frangible receptacles around the circumference of a tablet disc which has tablet dispenser apertures. An apertured base disc is below the tablet disc and an apertured locater disc is superimposed between base and tablet discs. A separate locking lever and tablet dispensing lever co-operating with a latch is necessary for dispensing. The dispenser is not re-usable by user, since the components cannot be quickly dismantled for refilling with dosages and then reassembled for re-usage without rupture or destruction.

ROSSMO CA—A 1,085,352 discloses a pharmaceutical dispenser having a container member with a plurality of radial walls and annular walls defining a set of compartments, a first index or lower lid and a second indexing or upper lid. A rotation control maintains the two lids co-axial on the dispenser, the indexing lid members are rotatable and provided with radial sector access apertures adapted to be vertically aligned to enable selective access to the content of the compartments according to time periods. Excessive rotation resistance between container and lids, inherent in this design has to be counteracted by constructing the lids of highly flexible material.

ORTHO PHARMACEUTICAL CORPORATION — AU—B—269,942 discloses a pharmaceutical dispenser which is a container covered by a rotatable lid, the container having an outer annular-shaped body with twenty circular recesses therein, but without any intermediate or inner compartments formed by radial walls and inner concentric walls indexed by upper and lower lids. Rotation direction control means are provided, but instead of a single tooth comprises a plurality of ratchet teeth arranged circumferentially and uninterruptedly and projecting horizontally from the inner walls of the body and rotatably engaging with a plurality of resilient legs on the cover, the legs also locking the cover to the body. Neither ROSSMO nor ORTHO disclose a radially resilient spigot for the lids and also does not disclose a system of co-operating, single, fixed upwardly directed, uni-directional ramped tooth, integrally fixed to the container outer wall and the upper surface of the lower lid co-operating with a plurality of ramped notches on the lower surface of both and upper and lower lids of Applicant's container at sector radial wall spacings to enable the upper lid to be rotated in a uni-direction with respect to the lower lid to sequentially engage each ramped notch sequentially to selectively engage the ramped tooth to align a respective arcuate segment aperture over the sector aperture of the lower lid and only over a single respective arcuate segment compartment.

The advantages of the invention are that it is a re-usable and re-fillable dispenser without any rupturable/frangible components, the lids being readily and completely removable for refilling compartments with solid dosage form pharmaceutical preparations, the lids returned and repositioned after filling to begin another dispensing regimen cycle. The dispenser is amenable to administering either single or multiple dosages at multiple time intervals during weekly or daily or even greater time intervals. Visual, tactile and aural dosage time interval signal indicia are provided on the lids and the outer wall of the container body.

The re-usable, single or multi-dosage dispenser for solid dosage form, pharmaceutical preparations of the invention as claimed and defined in the characterizing part of claim 1 is intended to provide a remedy to problems and to provide an industrially useful result. It solves the problem of rupturable and non-reusable dispensing containers which do not have means for readily opening up by hand the entire dosage holding storage area, enabling refilling and closing up again with the contents available in repetitive dispensing regimen cycles. The transparent walled base, integral central spigot catch and contra-rotating disc lids are rigid, yet readily movable with respect to each other. The dispenser enables solid dosage units for example, tablets to be tipped out into the hand or upon a surface without exerting any force, or the tablets can be picked out of the compartments merely by using fingers as each hourly compartment is selectively exposed.

The dispenser is particularly suitable for regular medicinal dosage application over a long time interval such as, requiring a weekly supply and four daily doses and comprises a circular multi-compartmented container divided into a plurality of major and minor dosage time interval compartments by a peripheral outer wall and seven radial walls and concentric annular walls, the container is closed by two circular lids each having a central hole enabling the lids to be axially and rotatably superimposed on the container onto a central, radially resilient spigot, the lower lid has a single sector slot alignable with each sector compartment, while the upper lid has four arcuate circular segment openings, the peripheral wall outer surface is stepped with a single, unidirectionally ramped tooth projecting upwardly therefrom, designed to successively engage with complementary shaped notches about the edge of a skirt on the lower lid at spacings corresponding to sector compartments, so that when the lower lid is rotated to align the sector opening successively with sector compartments, the upper surface of the lower lid has a single directionally ramped tooth projecting upwardly therefrom near the periphery which successively engages with unidirectionally ramped notches moulded in the lower surface of the upper lid at spacings corresponding to the width of arcuate compartments, both lids are rotatable in one direction to successively align the lower lid sector opening with a sector compartment, the upper lid is rotatable in one direction independently of the lower lid to successively align arcuate segment openings over arcuate compartments.

Figure 1 is a plan view of one form of pill box container constructed in accordance with the invention with lids removed for clarity.

Figure 2 is a plan view of the lower lid.

Figure 3 is a plan view of the upper lid.

Figure 4 is a perspective view of the assembled pill box with lids mounted over the central spigot; edge thicknesses have been exaggerated for clarity.

Figure 5 is a cross sectional view of the assembled pill box container and contra-rotatable lids taken along the line 5—5 of Figure 1.

Figure 6 is a partial exploded view of showing arrangement of co-operating ratchet tooth and grooves on the lids and container.

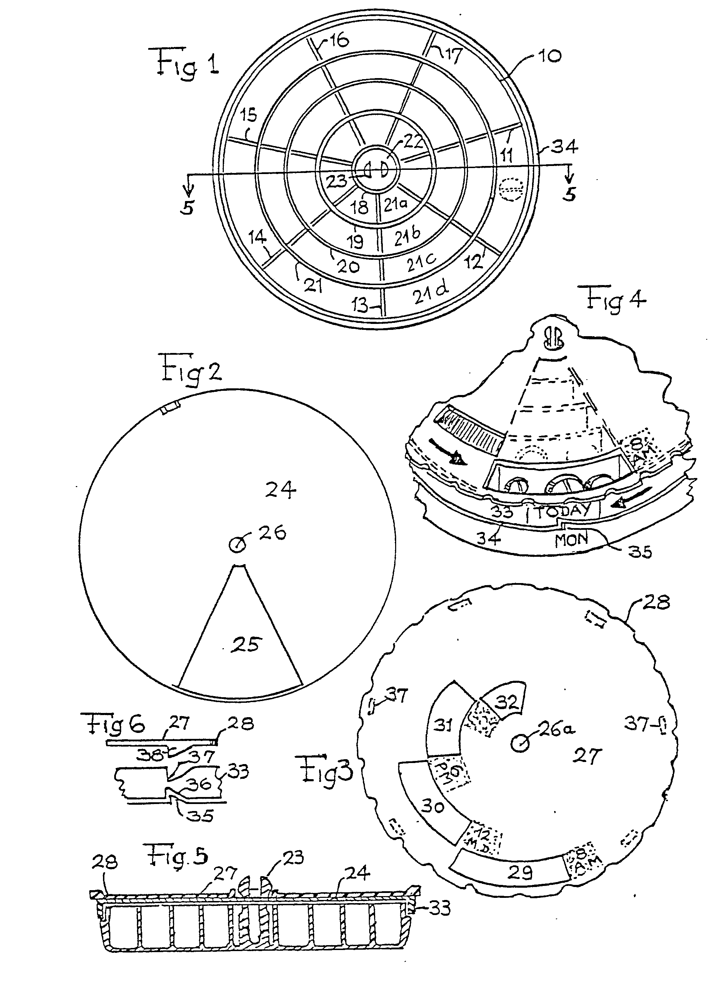

In one form, suitable for a weekly dosage administration regimen cycle of four dosages daily, the dispenser comprises a multi-compartmented circular container constructed of transparent synthetic plastics or resin material such as for instance, polymethyl methacrylate or a resin such as polystyrene, the container having an outer or peripheral wall 10 which is stepped midway up its height, the container is integrally divided into seven equal area compartments or sectors by the seven radial walls 11, 12, 13, 14, 15, 16, 17, to represent each day of one week. The seven sectors are in turn each sub-divided into four annular compartments 21a, 21b, 21c, 21d, by means of the four annular walls typified by 18, 19, 20 and 21, and also the outer perimeter wall of the container. The central area 22 of the container is occupied by a resilient split-pin spigot 23 which is adapted to receive and releasably hold each of two circular lids each of which has a central circular hole as in Figure 2 and 3 of the drawings. In Figure 2 there is shown circular lower lid 24 which has a single wedge-shaped pill compartment access "day" slot 25 equal to a one seventh sector of the compartment. The lid has a central circular hole 26 which is adapted to be pushed over the tapered but widened end of the spigot 23 of the container. Referring to Figure 3, the upper lid 27 shown is also of circular configuration and is provided with a knurled finger grip rim 28 which is designed to slightly overhang the container wall, being of wider diameter than outer peripheral wall 10 of the container. The upper lid of Figure 3 is provided with four annular pill compartment access slots 29, 30, 31 and 32 which are not only radially spaced, but are also angularly displaced with respect to each other. These four access slots are designed to enable four daily doses of pills, tablets or whatever to be retrieved and taken in succession. For this purpose, the surface of the plastics material at the side of each slot may be provided with roughened or satinised finish to enable the dosage time to be written thereon.

Referring to Figure 4, there is shown in perspective the assembled, seven-day, four doses daily pill box with contra-rotatable lids removably and rotatably installed over the control spigot. In this drawing the aperture of the lower lid equal to a one seventh sector is open at the first day position — marked "TODAY" on the skirted portion 33 the skirt of which extends downwardly for about half the height of the outer wall of the container. The lower edge of the skirted portion of the lower lid is adapted to bear against the upper edge of a stepped portion 34 on the outer surface of the main peripheral wall of the container. The upper edge of the step and the lower edge of the lower lid's skirt are provided with co-operating rotation direction control means in the form of a ramped ratchet tooth 35 on one member and a complementary-shaped ramped slot 36 on the other Figure 6. This enables the lid to be rotated progressively from day to day from click stop to click stop corresponding to each sector pill compartment as each compartment is emptied progressively in succession. The lower lid position marked "TODAY" is shown in vertical alignment with the first compartment which is marked "MON" on the lower outer wall exposed to view. Successive day markings through to "SUN" are marked on the container lower wall in a clockwise direction. There is also provided on the upper lid and on the lower lid co-operating rotational direction control and stop means and preferably a ratchet and pawl arrangement such as regularly spaced click stops with a ramped slot 37 on the lower lid upper surface successively engaging regularly spaced ramped ratchet teeth 38 on the underside of the container upper lid 27 in accordance with the width or spacing of each of the four-dose daily annular compartments, Figure 6. In operation, to fill the pill box, the two lids are first removed by pushing the resilient prongs of the spigot together and at the same time lifting off the lids. The requisite number of pills is placed in each and every one of the twenty eight compartments and the lids are replaced as before with the lower lid skirt "TODAY" marking set above the "MON" as first day marking on the container wall. The upper lid is rotated in a counter clockwise direction in four separate movements through lid click stops successively moving access slots to uncover four pill compartments in turn from the outer compartment through to the inner pill compartment. When the four sector compartments are emptied for that particular day, the lower lid is rotated in a clockwise direction to bring the seventh sector aperture over another radial four full annular compartments.

**Claims**

1. An oral, solid dosage form pharmaceutical dispenser in the form of a transparent, flat, circular container, divided into a plurality of equal-sized radial sector compartments by radial walls (11, 12, 13, 14, 15, 16, 17) each section being sub-divided into a plurality of arcuate circular-segment storage compartments (21a, 21b, 21c 21d) by radially equispaced concentric annular walls (18, 19, 20, 21) including a peripheral wall (10), a circular upper lid (27), and a circular lower lid (24) superimposed over and axially mounted upon and closing the container and rotatable with respect thereto, the upper lid (27) having a plurality of segment slots (29—32), spaced apart both circumferentially and radially, corresponding in shape and size to each respective arcuate circular segment compartment (21a, 21b 21c, 21d), the lower lid (24) having a single radial sector aperture (25) alignable with one of said selected radial sector compartment, the upper lid (27), being alignable with an arcuate circular segment storage compartment (21a, 21b, 21c, 21d), rotation direction control and stop means being provided for the lids (24, 27) with respect to the container, characterized in that: each lid (24, 27) has a central hole (26, 26a), the container has a resiliently radially compressible bifurcated pin (23) accessible for finger manipulation external of the container and for rotatably mounting the lids (24, 27) onto the top of the container to close the container and for removal of the lids (24, 27) from the container for recharging with dosages, the lower lid (24) having a peripheral skirt (33) engaging with a stepped portion (34) on the peripheral wall (10) of the container, lower interlocking means comprising fixed means (35) on the exterior surface of the container peripheral wall (10) for interlocking with complementary shaped means (36) on the lower edge of the peripheral skirt (33) of and fixed with respect to the lower lid (24) and rotating only when the lid (24) is rotated, upper interlocking means comprising means (37) on the upper surface of and fixed with respect to the lower lid (24) interlocking with complementary shaped means (38) on the lower surface, and fixed with respect to the upper lid (27) and rotated with the said upper lid, all of said interlocking means co-operating when the lids (24, 27) are rotated by hand for controlling the rotational direction of the lids (24, 27) with respect to each other and the base and providing dosage interval click stops whereby all compartments may be covered and radial sector storage compartments and arcuate segment storage compartments (21a, 21b, 21c, 21d) selectively and successively uncovered and dosage dispensed from the compartments through lid openings, said lower interlocking means allowing said lower lid to be rotated in one direction only with respect to said container and said upper interlocking means allowing said upper lid and said lower lid to be rotated together in said one direction and said upper lid to be rotated by itself in the opposite direction, to close all compartments or selectively open compartments whereby rotation of both said lids in said one direction enables said radial sector compartment-aperture access of said lower lid to be located above and aligned with one selected radial sector storage compartment of said container and rotation of said upper lid in said other direction enables one of said segment compartment access slots (29—32) to be located above and aligned with one of said correspondingly shaped arcuate circular-segment storage compartments of said container.

2. An oral, solid dosage form, pharmaceutical dispenser according to claim 1, wherein the walled container is divided into seven regular major dosage time interval compartments by radial walls (11), (12), (13), (14), (15), (16), (17) forming radial sectors, which are subdivided into annular sub-compartments by four, spaced apart annular walls (18), (19), (21) (22), the upper lid being provided with four annular slots (29), (30), (31), (32), each slot being angularly displaced with respect to the other and so that it can be positioned above a respective annular, sub-compartment, upon anti-clockwise rotation of the upper lid (27), the lower lid (24) having a one seventh of a complete circle radial sector slot (25) which is adapted to be successively rotated in a clockwise direction to successively uncover said radial sector compartments.

3. An oral, solid dosage form, pharmaceutical dispenser according to claim 1, wherein the lid counter-rotation direction control and stop means comprises one or more ratchet teeth (35), (37), and one or more corresponding pawl grooves (36), (38) on the lids (24), (27), and the peripheral wall of the container.

4. An oral, solid dosage form, pharmaceutical dispenser according to claim 1, wherein the lid counter-rotation direction control and stop means comprises a plurality of equidistantly spaced ratchet teeth (35), (38) and corresponding ramped pawl grooves (36), (37) arranged circumferentially about the underside of the container upper lid (27), about both the upper and underside of the container lower lid (24) and around an upper edge (34) formed by a step in the peripheral wall (33) of the container.

5. The pharmaceutical dispenser according to claim 1, wherein the upper lid (27) has four slots (29) (30), (31), (32) therein, each slot opening corresponding in area to a respective arcuate segment compartment (21a), (21b), (21c), (21d) and being spaced radially successively in a series of immediately adjacent slots, each at a distance equal to the radial width of each adjoining arcuate sector compartment and spaced angularly, successively at a distance corresponding to the angular length of the said respective sector compartment which a respective slot is intended to overlie each said arcuate segment compartment being sequentially uncovered by four successive angular movements of the said upper lid (27) in the same angular unidirection.

6. The pharmaceutical dispenser according to claim 1, wherein the exterior surface of the stepped container peripheral wall (10) has a single fixed ramped ratchet tooth (35), projecting upwardly therefrom, the edge of the skirt (33) of the lower lid (24) has seven equidistantly spaced ratchet indentations (36), each corresponding in shape to, and successively engaging with the tooth (35) on the stepped portion (34) of the container wall, the upper surface of the lower lid (24) has a single fixed ramped tooth (37), projecting upwardly therefrom, adjacent the perimeter thereof, the upper lid has six indentations (38) moulded in the lower surface and adjacent the periphery thereof, equidistantly spaced at a circumferential distance equal to a seventh radial segment arc and of corresponding shape to the lower lid (24) fixed ratchet tooth.

7. The pharmaceutical dispenser according to claim 6, wherein the ramped or uni-directional notches of the upper lid are moulded into the lower surface thereof, aligned with the direction of unirotation of the said lid and spaced at angular positions around the lid at the same distance subtended by each sector, said notches being disposed vertically, directly above a radial wall of a sector compartment of the container, when the lids are in aperture open position upon the container and being equal in angular distance to the wall arc of a segment compartment, a single, uni-directional ramped toth being fixedly moulded on the upper surface of the lower lid also being aligned with the direction of uni-rotation of the said lid and being positioned over a radial wall of a sector compartment of the container, whereby when the upper lid is rotated in its uni-direction, each ramped notch thereof sequentially and selectively engages the single ramped tooth of the lower lid to align a respective arcuate segment aperture of the upper lid over the sector aperture of the lower lid and only over a single respective arcuate segment compartment.

8. An oral, solid dosage form, pharmaceutical dispenser according to any preceding claim wherein the lower periphery of the main wall of the container is provided with equidistantly spaced dosage administration, tactile and/or visual time interval indicia.

9. An oral, solid dosage form, pharmaceutical dispenser according to claim 8, wherein the upper surface of the upper lid (27) is provided, adjacent at least one side edge of each slot with dosage administration, tactile and/or visual time interval indicia.

10. An oral, solid dosage form, pharmaceutical dispenser according to claim 1, wherein the said control hole is a circular aperture (26), (26a) which is adapted to be removably placed over and rotatably held by the central split-pin spigot (23), integrally moulded onto the base of the container, said lid being quickly removed and replaced by hand to enable the container to be refilled with solid dosage pills, tablets and the like for recommencement of another dosage administration regimen cycle.

**Patentansprüche**

1. Spender für in fester, dosierter Form oral verabreichbare Arzneimittel in Form eines transparenten, flachen, kreisrunden Behälters, welcher durch Radialwände (11, 12, 13, 14, 15, 16, 17) in eine Anzahl von kreissektorförmigen Abteilen gleicher Abmessung unterteilt ist, wobei jeder Sektor wiederum in eine Anzahl von Speicherabteilen in Form von kreisbogenförmigen Segmenten (21a, 21b, 21c, 21d) durch radial in gleichen Abständen voneinander verhaufende konzentrische Ringwände (18, 19, 20, 21) einschließlich einer Umfangswand (10) unterteilt ist und ein Oberdeckel (27) mit einem darunterliegenden Unterdeckel (24) axial auf dem Behälter montiert sind, diesen verschließen und gegenüber demselben verdrehbar sind, wobei der Oberdeckel (27) eine Anzahl von umfangsmäßig und radial voneinander getrennten Segmentschlitzen (29—32) aufweist, welche in Form und Abmessung jeweils einem kreisbogenförmigen Segmentspeicher (21a, 21b, 21c, 21d) entsprechen, und der Unterdeckel (24) eine einzige mit einem der ausgewählten radialen Segmentspeicher ausrichtbare radiale Sektoröffnung (25) aufweist, wobei der Oberdeckel (27) mit einem kreisbogenförmigen Segmentspeicher (21a, 21b, 21c, 21d) ausrichtbar ist, während Anordnungen vorgesehen sind, um die Drehrichtung der Deckel gegenüber dem Behälter zu steuern und die Deckel zu arretieren, dadurch gekennzeichnet, daß jeder Deckel (24, 27) ein Mittelloch (26, 26a) und die Behälter einen nachgiebig radial zusammendrückbaren, gabelförmigen Zapfen (23) aufweist, der von außen her mit dem Finger betätigbar ist und die Deckel auf der Oberseite des Behälters verdrehbar trägt, um den Behälter zu verschließen und die Deckel (24, 27) zwecks erneuter Füllung des Behälters mit den vergesehenen Arzneimittelmengen vom Behälter abzuheben, daß der Unterdeckel (24) eine umlaufende Randleiste (33) besitzt, welche mit einem abgestuften Bereich (34) an der Umfangswand (10) des Behälters in Eingriff steht, daß untere und obere Verriegelungsorgane vorgesehen sind, wobei die unteren aus feststehenden Organen (35) an der Außenseite der Umfangswand (10) des Behälters bestehen, die mit komplementär geformten Organen (36) an der Unterkante der umlaufenden Randleiste (33) des fest damit verbundenen Unterdeckels (24) verriegelbar sind und nur bei Verdrehung des Unterdeckels (24) verdrehbar sind, und die oberen Verriegelungsorgane aus an der Oberseite des Unterdeckels ausgebildeten und gegenüber dem Unterdeckel feststehenden Organen (37) bestehen, welche mit komplementär geformten, an der Unterseite des Oberdeckels (27) ausgebildeten und gegenüber demselben feststehenden Organen (38) verriegelbar sind, wobei alle diese Verriegelungsorgane zuwammenwirken, wenn die Deckel (24, 27) von Hand verdreht werden, um die Drehrichtung der Deckel (24, 27) zueinander und gegenüber der Basis zu steuern und Sperranschläge für Dosis-Intervalle zu bilden, wodurch alle Abteile verdeckbar sind und radiale sektorförmige Speicherabteile sowie kreisbogenförmige Segmentspeicher (21a, 21b, 21c, 21d) wahlweise und nacheinander freilegbar und aus den Abteilen durch Deckelöffnungen die Dosierungen austeilbar sind, und daß die unteren Verriegelungsorgane derart ausgebildet sind, daß der Unterdeckel gegenüber dem Behälter nur in einer Richtung verdrehbar ist, und die oberen Verriegelungsorgane derart ausgebildet sind, daß der Oberdeckel und der Unterdeckel zusammen in dieser einen Richtung und der Oberdeckel allein in entgegengesetzter Richtung verdrehbar ist, um alle Abteile zu schließen oder wahlweise Abteile zu öffnen, wodurch bei Verdrehung beider Deckel in der einen Richtung die radiale Sektoröffnung des Unterdeckels über einen ausgewählten radialen Speichersektor des Behälters bringbar und mit demselben ausrichtbar ist und bei Verdrehung des Oberdeckels in entgegengesetzter Richtung einer der Segmentschlitze (29—32) über dinen der entsprechend geformten kreisbogenförmigen Segmentspeicher des Behälters bringbar und mit demselben ausrichtbar ist.

2. Spender für in fester, dosierter Form oral verabreichbare Arzneimittel nach Anspruch 1, dadurch gekennzeichnet, daß der Behälter durch radiale Wände (11), (12), (13), (14), (15), (16), (17), in sieben Abteile für Hauptdosenintervalle geteilt ist, welche radiale Sektoren bilden, die ihrerseits durch vier in Abständen verlaufende Ringwände (18), (19), (21), (22) in kreisringförmige Unterabteile unterteilt sind, daß der Oberdeckel vier kreisringförmige Schlitze (29), (30), (31), (32) aufweist, die jeweils winkelmäßig zueinander versetzt sind, sodaß jeder Schlitz bei Verdrehung des Oberdeckels entgegen dem Uhrzeigersinn über ein entsprechendes kreisringförmiges Unterabteil bringbar ist, und daß der Unterdeckel (24) einen radialen Sektorschlitz (25) in einer Breite von 1/7 eines Kreises aufweist, welcher im Uhrzeigersinn stufenweise verdrehbar ist, um nacheinander die radialen Sektorabteile freizulegen.

3. Spender für in fester, dosierter Form oral verabreichbare Arzneimittel nach Anspruch 1, dadurch gekennzeichnet, daß die Anordnungen zur Steuerung der Gegendrehrichtung der Deckel und zu deren Arretierung aus einer oder mehreren Sperrzähnen (35), (38) und einem oder mehreren entsprechenden Einschnitten (36), (37) an den Deckeln (24), (27) und an der Umfangswand des Behälters bestehen.

4. Spender für in fester, dosierter Form oral verabreichbare Arzneimittel nach Anspruch 1, dadurch gekennzeichnet, daß die Anordnungen zur Steuerung de Gegendrehrichtung der Deckel und zu deren Arretierung aus mehreren in gleichen Abständen voneinander ausgebildeten Sperrzähnen (35), (39) und entsprechend abgeschrägten Einschnitten (36), (39) am Umfang der Unterseite des Oberdeckels (27), der Ober- und Unterseite des Unterdeckels (24) und längs einer durch eine Stufe in der Umfangswand (10) des Behälters ausgebildeten Oberkante (34) bestehen.

5. Arzneimittelspender nach Anspruch 1, dadurch gekennzeichnet, daß der Oberdeckel (27) vier Schlitze (29), (30), (31), (32) aufweist, wobei die Schlitzöffnungen flächenmäßig jeweils einem kreisbogenförmigen Segmentabteil (21a), (21b), (21c), (21d) entsprechen und in radialer Richtung in einer Reihe unmittelbar anschließender Schlitze jeweils in einem Abstand gleich der radialen Breite eines jeden angrenzenden kreisbogenförmigen Sektorabteils sowie winkelmäßig fortlaufend in einem der Winkellänge des betreffenden Sektorabteils entsprechenden Abstand angeordnet sind, sodaß jeweils ein Schlitz über jedem dieser kreisbogenförmigen Segmentabteile liegt, die nacheinander durch vier aufeinanderfolgende Winkelbewegungen des Oberdeckels (27) in ein und derselben Richtung freigelegt werden.

6. Arzneimittelspender nach Anspruch 1, dadurch gekennzeichnet, daß die Außenseite der abgestuften Umfangswand (10) des Behälters einen einzigen feststehenden, abgeschrägten Sperrzahn (35) trägt, der nach oben weist, daß die Kante der Randleiste (33) des Unterdeckels (24) sieben in gleichen Abständen angeordnete Einschnitte (36) aufweist, welche jeweils in der Form dem Sperrzahn (35) am abgestuften Teil (34) der Behälterwand entsprechen und nacheinander mit demselben in Eingriff bringbar sind, daß die Oberseite des Unterdeckels (24) einen einzigen feststehenden abgeschrägten Zahn (37) trägt, der neben dem Umfang nach oben weist, und daß der Oberdeckel sechs Einschnitte (38) in seiner Unterseite neben seinem Umfang aufweist, welche in gleichen Bogenabständen von jeweils 1/7 Radialsegmentbogen ausgebildet sind und in der Form dem feststehenden Sperrzahn des Unterdeckels (24) entsprechen.

7. Arzneimittelspender nach Anspruch 6, dadurch gekennzeichnet, daß die abgeschrägten oder in einer Richtung verlaufenden Einschnitte im Oberdeckel in dessen Unterseite eingeformt sind und mit der Richtung der Uni-rotation dieses Deckels fluchten sowie rund um den Deckel in Winkelpositionen mit dem gleichen Abstand, wie er von jedem Sektor eingenommen wird, angeordnet sind, wobei diese Einschnitte oder Einkerbungen senkrecht direkt über einer Radialwand eines Sektorabteils des Behälters liegen, wenn die Deckel sich in Öffnungsposition auf dem Behälter und im gleichen Winkelabstand zum Wandbogen eines Segmentabteils befinden, daß ein einziger, einseitig gerichtet abgeschrägter Zahn, der fest an der Oberseite des Unterdeckels angeformt ist, ebenfalls in der Richtung der einseitigen Drehung dieses Deckels verläuft und über einer Radialwand eines Sektorabteils des Behälters liegt, wodurch, wenn der Oberdeckel in seiner einseitigen Richtung verdreht wird, seine abgeschrägten Einkerbungen nacheinander und selektiv den einzigen abgeschrägten Zahn des unterdeckels einrasten lassen, wodurch eine diesbezügliche kreisbogenförmige Segmentöffnung des Oberdeckels über der Sektoröffnung des Unterdeckels und nur über einem einzigen diesbezüglichen kreisbogenförmigen Segmentabteil zu liegen kommt.

8. Spender für in fester dosierter Form oral verabreichbare Arzneimittel nach irgendeinem der vorstehenden Ansprüche, dadurch gekennzeichnet, daß der unter Umfang der Hauptwand des Behälters in gleichen Abständen mit fühlbaren und/oder sichtbaren Zeitinervall-Angaben über die Verabreichungsdosis versehen ist.

9. Spender für in fester dosierter Form oral verabreichbare Arzneimittel nach Anspruch 8, dadurch gekennzeichnet, daß die Oberseite des Oberdeckels (27) neben wenigstens einer Seitenkante eines jeden Schlitzes mit fühlbaren und/oder sichtbaren Zeitintervall-Angaben über die Verabreichungsdosis versehen ist.

10. Spender für in fester dosierter Form oral verabreichbare Arzneimittel nach Anspruch 1, dadurch gekennzeichnet, daß das Mittelloch eine kreisrunde Öffnung (26), (26a) ist, welche abnehmbar auf den auf der Basis des Behälters direkt angeformten zentralen gabelförmigen Zapfen (23) aufdrückbar und von diesem verdrehbar festhaltbar ist, wodurch die Deckel schnell von Hand abnehmbar und wieder aufdrückbar sind und der Behälter erneut mit festen, dosierten Pillen, Tabletten und dgl. füllbar ist, sodaß ein weiterer dosierter Verabreichungszyklus begonnen werden kann.

**Revendications**

1. Distributeur de produits pharmaceutiques présentés sous la forme de doses solides à prendre par voie buccale, constitué par un récipient transparent, plat et circulaire divisé par des parois radiales (11, 12, 13, 14, 15, 16, — 17,) en un certain nombre de compartiments égaux en forme de secteurs circulaires correspondant chacun à un intervalle de temps représentant la durée d'utilisation d'une dose principale et subdivisé, par des parois annulaires concentriques (18, 19, 20, 21) équidistantes dans le sens radial, en un certain nombre de compartiments de stockage (21a, 21b, 21c, 21d) en forme de segments de couronnes circulaires correspondant chacun à un intervalle de temps représentant la durée d'utilisation d'une partie de dose, par une paroi périphérique (1), par un couvercle circulaire supérieur (27) et par un couvercle circulaire inférieur (24) superposés et montés axialement sur le récipient qu'ils ferment et sur lequel ils peuvent tourner, le couvercle supérieur (27) comportant un certain nombre d'ouvertures en forme de segments espacés les uns des autres tant dans le sens périphérique que dans le sens radial, le couvercle inférieur (24) ne comportant qu'une ouverture (25) en forme de secteur circulaire pouvant se placer dans l'alignement d'un compartiment en forme de secteur circulaire choisi, le couvercle supérieur (27) pouvant se placer dans l'alignement d'un compartiment de stockage en forme de segment de couronne circulaire correspondant à un intervalle de temps représentant la durée d'utilisation d'une partie de dose, des dispositifs étant prévus pour assurer la rotation, la commande de la direction et l'arrêt des couvercles (24, 27) par rapport au récipient, caractérisé en ce que chaque couvercle (24, 27) comporte un trou central (26, 26a), le couvercle supérieur (27) comporte un certain nombre d'ouvertures d'accès aux compartiments (29, 30) (31, 32) en forme de segments de couronnes circulaires espacés les uns des autres dans le sens radial et dans le sens périphérique et correspondant en formes et en dimensions aux compartiments (21a, 21b, 21c, 21d) en forme de segments de couronnes circulaires, une clavette fourchue (23) pouvant être comprimée élastiquement dans le sens radial et manipulée avec les doigts de l'intérieur du récipient et permittant le montage des couvercles (24, 27) sur le récipient de manière qu'ils puissent tourner pour fermer le récipient et pour que l'on puisse enlever les couvercles du récipient pour y introduire de nouvelles doses, le couvercle inférieur (24) comportant une jupe périphérique s'engageant contre une partie en gradin (34) de la paroi extérieure du récipient, des moyens d'emboîtement inférieurs comprenant des moyens fixes disposés sur la surface extérieure de la paroi périphérique du récipient pour l'emboîtement avec des moyens de formes complémentaire disposés sur le bord inférieur de la jupe périphérique, fixes par rapport au couvercle inférieur (24) et ne tournant que lorsque le couvercle (24) tourne, des moyens d'emboîtement supérieurs comprenant des moyens disposés sur la surface supérieure du couvercle inférieur (24) et fixes par rapport à lui, assurant l'emboîtement avec des moyens de forme complémentaire disposés sur la surface inférieure et fixes par rapport au couvercle supérieur et tournant avec ce couvercle supérieur, tous ces moyens d'emboîtement coopérant, lorsque les couvercles sont tournés à la main, pour commander le sens de rotation des couvercles l'un par rapport à l'autre et par rapport à la base et pour constituer des cliquets d'arrêt aux intervalles de dosage, de sorte que tous les compartiments peuvent être recouverts et que les compartiments en forme de secteurs circulaires et les compartiments en forme de segments de couronnes circulaires sont successivement et sélectivement découverts et que les doses correspondantes sont distribuées à partir des compartiments en passant par les ouvertures des couvercles, lesdits moyens d'emboîtement inférieurs permettant de faire tourner ledit couvercle inférieur uniquement dans un sens par rapport audit récipient et lesdits moyens d'emboîtement supérieurs permettant de faire tourner ensemble ledit couvercle supérieur et ledit couvercle inférieur dans ladite direction, le couvercle supérieur tournant de lui-même en sens inverse de manière à fermer tous les compartiments ou à ouvrir sélectivement des compartiments, la rotation des deux couvercles dans le même sens faisant que ladite ouverture en forme de secteur circulaire dudit couvercle inférieur se place au-dessus et dans l'alignement d'un compartiment de stockage en forme de secteur circulaire choisi et la rotation dudit couvercle supérieur dans l'autre sens faisant que l'une des ouvertures en forme de segments de couronnes circulaires se place au-dessus et dans l'alignement du compartiment en forme de segment de couronne circulaire de forme analogue.

2. Distributeur de produits pharmaceutiques présentés sous la forme de doses solides à prendre par voie buccale, suivant la revendication 1 caractérisé en ce que le récipient muni de parois est divisé en sept compartiments, correspondant chacun à un intervalle de temps représentant la durée d'utilisation d'une dose principale, par des parois radiales (11), (12), (13), (14), (15), (16), (17), qui délimitent des secteurs circulaires qui sont subdivisés en sous-compartiments annulaires par quatre parois annulaires (18), (19), (21), (22), séparées, le couvercle supérieur étant muni de quatre ouvertures annulaires (29), (30), (31), (32), chaque ouverture étant décalée d'un certain angle par rapport aux autres de telle manière qu'elle puisse être placée au-dessus d'un sous-compartiment annulaire correspondant par une rotation du couvercle supérieur (27) dans le sens inverse des aiguilles d'une montre, le couvercle inférieur (24) ne comportant qu'une septième ouverture (25) en forme de secteur circulaire qui est disposée de manière qu'en tournant dans le sens des aiguilles d'une montre elle découvre successivement les compartiments à pilules ou à cachets.

3. Distributeur de produits pharmaceutiques présentés sous la forme de doses solides à prendre par voie buccale, suivant la revendication 1, caractérisé en ce que les moyens de commande de la rotation du couvercle en sens inverse et d'arrêt comprennent une ou plusieurs dents d'encliquetage (35), (37) et une ou plusieurs rainures d'encliquetage correspondantes (36), (38) ménagées sur les couvercles (24), (27) et dans la paroi périphérique du récipient.

4. Distributeur de produits pharmaceutiques présentés sous la forme de doses solides à prendre par voie buccale, suivant la revendication 1, caractérisé en ce que les moyens de commande de la rotation du couvercle en sens inverse et d'arrêt comprennent un certain nombre de dents d'encliquetage équidistantes (35), (38) et de rainures d'encliquetage correspondantes (36), (37) comportant des surfaces inclinées et ménagées à la périphérie du bord inférieur du couvercle supérieur (27) du récipient, du bord supérieur et du bord inférieur du couvercle inférieur (24) du récipient et d'un rebord supérieur (34) constitué par un gradin ménagé dans la paroi périphérique (33) du récipient.

5. Distributeur de produits pharmaceutiques présentés sous la forme de doses solides à prendre par voie buccale, suivant la revendication 1, caractérisé en ce que le couvercle supérieur (27) comporte quatre ouvertures (29), (30), (31), (32), chacune de ces ouvertures ayant une surface correspondant à un compartiment en forme de segment de couronne circulaire (21a), (21b), (21c), (21d) et se trouvant décalée dans le sens radial de manière à former avec les autres une série d'ouvertures contiguës dont chacune est à une distance égale à la largeur, dans le sens radial, de chacun des compartiments en forme de segment de couronne circulaire et à une distance angulaire égale à la longueur de l'angle occupé par le compartiment en forme de secteur circulaire auquel l'ouverture se superpose, chaque compartiment en forme de segment de couronne circulaire étant découvert successivement par suite de quatre déplacements angulaires du couvercle supérieur (27) dans le même sens.

6. Distributeur de produits pharmaceutiques présentés sous la forme de doses solides à prendre par voie buccale, suivant la revendication 1, caractérisé en ce que la surface extérieure de la paroi périphérique du récipient munie de gradins comporte une seule dent d'encliquetage fixe (35) comportant une surface inclinée et faisant saillie vers le haut, le rebord de la jupe (33) du couvercle inférieur (24) comportant sept encoches d'encliquetage équidistantes (36) ayant une forme leur permettant de se mettre successivement en prise avec la dent (35) sur la partie en gradin (34) de la paroi du récipient, la surface supérieure du couvercle inférieur (24) comportant une seule dent fixe (37) comportant une surface inclinée et faisant saillie vers le haut à proximité du périmètre, le couvercle supérieur comportant six encoches (38) réalisées par moulage dans la surface inférieure à proximité de sa périphérie et réparties sur la périphérie à des distances égales à un septième de circonférence et ayant une forme correspondant à la dent d'encliquetage fixe du couvercle inférieur (24).

7. Distributeur de produits pharmaceutiques présentés sous la forme de doses solides à prendre par voie buccale, suivant la revendication 6, caractérisé en ce que les encoches munies de surfaces inclinées ou unidirectionnelles ménagées dans le couvercle supérieur sont réalisées par moulage dans la surface inférieure de ce couvercle, alignées dans le sens de rotation du couvercle et situées à des positions angulaires autour du couvercle à la même distance sous-tendue par chaque secteur circulaire, lesdites encoches ètant placées verticalement directement au-dessus d'une paroi radiale d'un compartiment en forme de secteur circulaire lorsque les couvercles sont en position d'ouverture au-dessus du récipient et étant à des distances angulaires égales à la longueur d'arc de paroi d'un compartiment en forme de segment de couronne circulaire, une unique dent unidirectionnelle comportant une surface inclinée étant réalisée à poste fixe par moulage sur la surface supérieure du couvercle inférieur et étant également dans le sens de la rotation du couvercle et étant placée au-dessus d'une paroi radiale d'un compartiment en forme de secteur circulaire, de sorte que, lorsque le couvercle supérieur tourne dans son sens unique, chaque encoche à surface inclinée se met successivement et sélectivement en prise avec l'unique dent à surface inclinée ménagée dans le couvercle inférieur pour placer l'ouverture en forme de segment de couronne circulaire du couvercle supérieur exactement au-dessus de l'ouverture en forme de secteur circulaire du couvercle inférieur et uniquement au-dessus d'un seul compartiment en forme de segment de couronne circulaire.

8. Distributeur de produits pharmaceutiques présentés sous la forme de doses solides à prendre par voie buccale, suivant l'une quelconque des revendications précédentes caractérisé en ce que le bord périphérique inférieur de la paroi principale du récipient est muni de repères tactiles et/ou visuels indiquant les intervalles de temps correspondant aux doses partielles à administrer.

9. Distributeur de produits pharmaceutiques présentés sous la forme de doses solides à prendre par voie buccale, suivant la revendication 8 caractérisé en ce que la surface supérieure du couvercle supérieur (27) est munie, au moins à proximité de l'un des bords de chaque ouverture, de repères tactiles et/ou visuels correspondant aux doses partielles à administrer.

10. Distributeur de produits pharmaceutiques présentés sous la forme de doses solides à prendre par voie buccale, suivant la revendication 1 caractérisé en ce que chacun des couvercles comporte une ouverture centrale circulaire (26), (26a) qui peut être placée de manière amovible et maintenue pendant la rotation par un ergot fendu central (23) d'une seule pièce par moulage sur la base du récipient, ledit couvercle étant rapidement enlevé et remis en place à la main pour permettre le remplissage du récipient au moyen de doses solides de pilules, de cachets et d'autre produits analogues pour un autre cycle d'administration de médicaments.

Fig 1

Fig 2

Fig 3

Fig 4

Fig 5

Fig 6